# EUROPEAN PATENT SPECIFICATION

(11) **EP 4 024 333 B1**
(45) Date of publication and mention of the grant of the patent: **11.10.2023**
(21) Application number: 20881785.8
(22) Date of filing: 30.06.2020
(51) Int. Cl.: G06T 7/00, G06V 10/22, G06V 10/25

(54) **OBJECT DETECTION DEVICE, OBJECT DETECTION METHOD, OBJECT DETECTION PROGRAM, LEARNING DEVICE, LEARNING METHOD AND LEARNING PROGRAM**
OBJEKT-DETEKTIONSVORRICHTUNG, OBJEKT-DETEKTIONSVERFAHREN, OBJEKT-DETEKTIONSPROGRAMM, LERNVORRICHTUNG, LERNVERFAHREN UND LERNPROGRAMM
DISPOSITIF DE DÉTECTION D'OBJET, PROCÉDÉ DE DÉTECTION D'OBJET, PROGRAMME DE DÉTECTION D'OBJET, DISPOSITIF D'APPRENTISSAGE, PROCÉDÉ D'APPRENTISSAGE ET PROGRAMME D'APPRENTISSAGE

(30) Priority: 29.10.2019 JP 2019196150
(43) Date of publication of application: 06.07.2022
(73) Proprietor: MITSUBISHI ELECTRIC CORPORATION, Chiyoda-ku Tokyo 100-8310 (JP)
(72) Inventor: ISANO, Shoto, Tokyo 100-8310 (JP); NAKAO, Takamasa, Tokyo 108-0023 (JP); ABE, Hirokazu, Tokyo 108-0023 (JP); TOKUDA, Yuuki, Tokyo 108-0023 (JP); YAMATARI, Mitsuyoshi, Tokyo 108-0023 (JP)
(74) Representative: Pfenning, Meinig & Partner mbB
(86) International application number: PCT/JP2020/025708
(87) International publication number: WO 2021/084797

(56) References cited:
- EP-A1- 2 741 253
- EP-A2- 2 570 963
- JP-A- 2009 123 081
- JP-A- 2013 037 488
- US-A1- 2017 206 426
- HASELHOFF A ET AL: "A vehicle detection system based on Haar and Triangle features", INTELLIGENT VEHICLES SYMPOSIUM, 2009 IEEE, IEEE, PISCATAWAY, NJ, USA, 3 June 2009 (2009-06-03), pages 261-266, XP031489851, ISBN: 978-1-4244-3503-6

## Description

### Technical Field

The present invention relates to a technique of detecting a target object from image data with using an object detection model.

### Background Art

Conventionally, image data obtained by a photographing device is inputted to an object detection model generated using deep learning or the like, thereby detecting a target object included in the image data (see Patent Literature 1). With the object detection model, sometimes the object is detected after the image data is reduced to a predetermined size.

EP 2741253 describes an image recognition apparatus that determines whether an image of a pedestrian is captured in a frame of video data captured by a vehicle mounted camera.

EP 2570963 describes a device for recognizing external worlds that analyzes an image acquired by capturing the vicinity of a self-vehicle.

Haselhoff, A, et. al.: "A vehicle detection system based on Haar and Triangle features", Intelligent Vehicles Symposium 2009, IEEE, 3 June 2009, pages 261-266 describes a method to compute Triangle filters for feature extraction based on four integral images.

US 2017/206426 describes pedestrian detection with saliency maps.

### Citation List

### Patent Literature

Patent Literature 1: JP 2019-003396 A

### Summary of Invention

### Technical Problem

For example, an object that appears deep in the background of image data becomes excessively small when the image data is reduced, and accordingly it is difficult to detect the object with using an object detection model.

An objective of the present invention is to make it possible to detect even an object that appears small, with using an object detection model.

### Solution to Problem

This object is achieved by the present invention as defined in the appended claims.

### Advantageous Effects of Invention

In the present invention, a target object is detected by inputting not only target data but also partial data to an object detection model. As a result, even an object that appears small, such as an object appearing deep in the background of image data, can be detected with using the object detection model.

### Brief Description of Drawings

Fig. 1 is a configuration diagram of an object detection device 10 according to Embodiment 1.
Fig. 2 is a flowchart illustrating operations of the object detection device 10 according to Embodiment 1.
Fig. 3 is a diagram illustrating a detection target region 33 and an enlarging region 34 which are according to Embodiment 1.
Fig. 4 is a diagram illustrating target data 35 and partial data 36 which are according to Embodiment 1.
Fig. 5 includes explanatory diagrams of size modification processing according to Embodiment 1.
Fig. 6 is a configuration diagram of an object detection device 10 according to Modification 1.
Fig. 7 is a diagram illustrating enlarging regions 34 according to Embodiment 2.
Fig. 8 is a configuration diagram of an object detection device 10 according to Embodiment 3.
Fig. 9 is a flowchart illustrating operations of the object detection device 10 according to Embodiment 3.

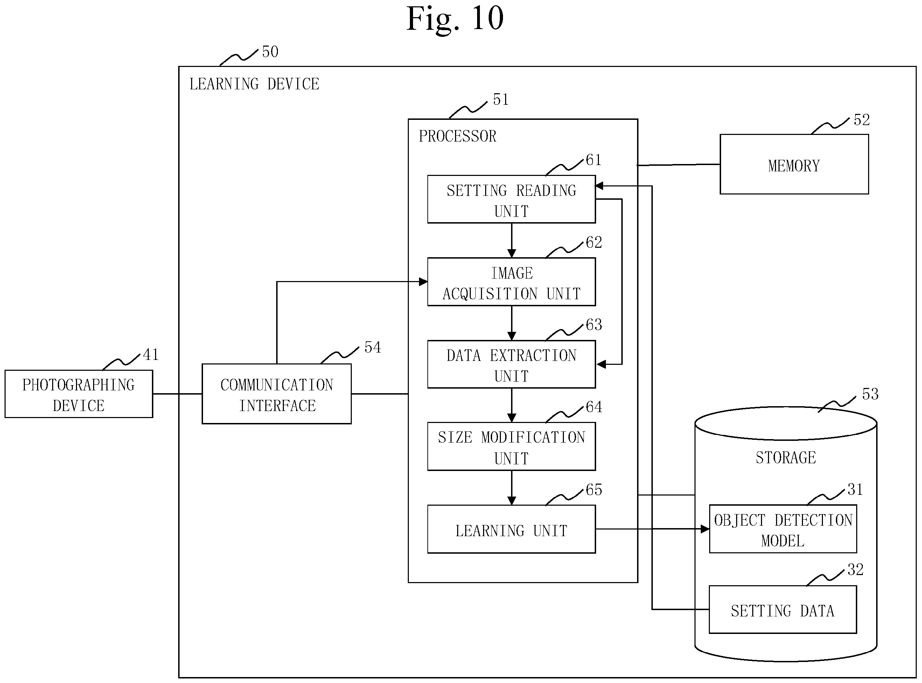

Fig. 10 is a configuration diagram of a learning device 50 according to Modification 5.

### Description of Embodiments

### Embodiment 1.

### *** Description of Configuration ***

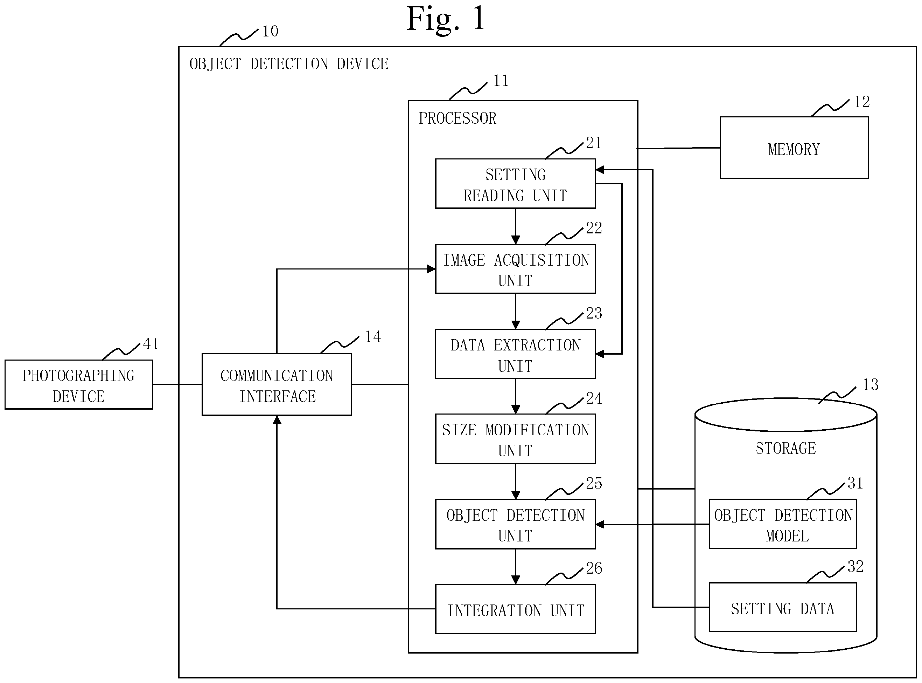

A configuration of an object detection device 10 according to Embodiment 1 will be described with referring to Fig. 1.

The object detection device 10 is a computer.

The object detection device 10 is provided with hardware devices which are a processor 11, a memory 12, a storage 13, and a communication interface 14. The processor 11 is connected to the other hardware devices via a signal line and controls the other hardware devices.

The processor 11 is an Integrated Circuit (IC) which performs processing. Specific examples of the processor 11 include a Central Processing Unit (CPU), a Digital Signal Processor (DSP), and a Graphics Processing Unit (GPU).

The memory 12 is a storage device that stores data temporarily. Specific examples of the memory 12 include a Static Random-Access Memory (SRAM) and a Dynamic Random-Access Memory (DRAM).

The storage 13 is a storage device that keeps data. Specific examples of the storage 13 include a Hard Disk Drive (HDD). Alternatively, the storage 13 may be a portable recording medium such as a Secure Digital (SD; registered trademark), a CompactFlash (registered trademark; CF), a Nand flash, a flexible disk, an optical disk, a compact disk, a Blu-ray (registered trademark) Disc, and a Digital Versatile Disk (DVD).

The communication interface 14 is an interface to communicate with an external device. Specific examples of the communication interface 14 include an Ethernet (registered trademark) port, a Universal Serial Bus (USB) port, and a High-Definition Multimedia Interface (HDMI; registered trademark) port.

The object detection device 10 is connected to a photographing device 41 such as a monitor camera via the communication interface 14.

The object detection device 10 is provided with a setting reading unit 21, an image acquisition unit 22, a data extraction unit 23, a size modification unit 24, an object detection unit 25, and an integration unit 26, as function constituent elements. Functions of the function constituent elements of the object detection device 10 are implemented by software.

A program that implements the functions of the function constituent elements of the object detection device 10 is stored in the storage 13. This program is read into the memory 12 by the processor 11 and run by the processor 11. Hence, the functions of the function constituent elements of the object detection device 10 are implemented.

An object detection model 31 and setting data 32 are stored in the storage 13.

In Fig. 1, the processor 11 is illustrated only one. However, a plurality of processors 11 may be employed. The plurality of processor 11 may cooperate with each other to run the program that implements the functions.

### *** Description of Operations ***

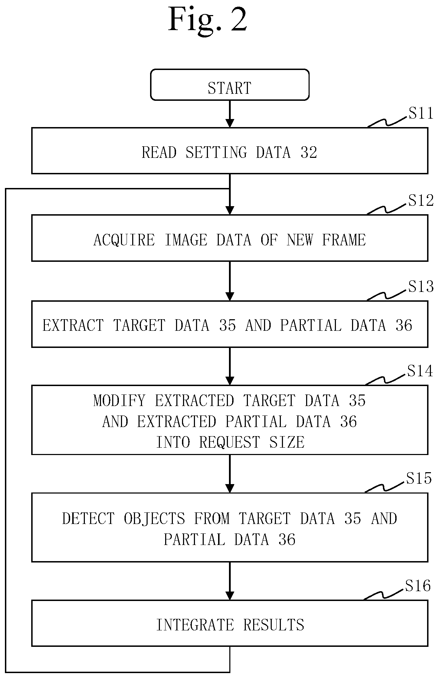

Operations of the object detection device 10 according to Embodiment 1 will be described with referring to Figs. 2 to 5.

An operation procedure of the object detection device 10 according to Embodiment 1 corresponds to an object detection method according to Embodiment 1. A program that implements the operations of the object detection device 10 according to Embodiment 1 corresponds to an object detection program according to Embodiment 1.

### (Step S11 of Fig. 2: Setting Reading Process)

The setting reading unit 21 reads the setting data 32 indicating a detection target region 33 and an enlarging region 34 from the storage 13.

The detection target region 33 is a region to detect a target object, out of a photographing region to be photographed by the photographing device 41.

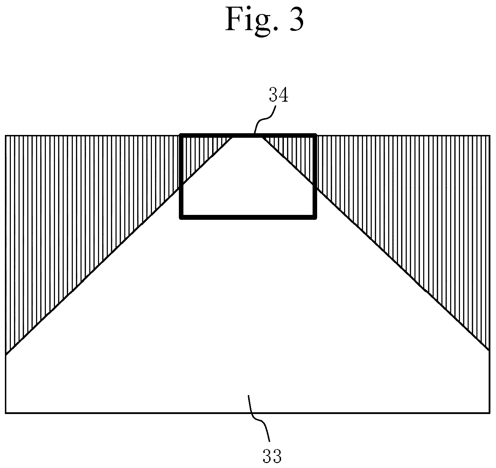

The enlarging region 34 is a region to detect an object that appears small, out of the detection target region 33. In Embodiment 1, the enlarging region 34 is a region located deep in the background of the image data, as illustrated in Fig. 3. That is, in Embodiment 1, the enlarging region 34 is a region within the detection target region 33, including a region located at a distance in a depth direction that is equal to or longer than a reference distance, out of a photographing region of the photographing device 41. It is possible that a region where a small object is to be treated as a target object is set as an enlarging region 34, even if this region is on a front side in the depth direction. Also, a plurality of enlarging regions 34 may be set in the detection target region 33.

In Embodiment 1, the setting data 32 indicating the detection target region 33 and the enlarging region 34 is set in advance by an administrator or the like of the object detection device 10, and is stored in the storage 13. However, in a process of step S11, the setting reading unit 21 may have the administrator or the like designate the detection target region 33 and the enlarging region 34. That is, for example, the setting reading unit 21 may have a function of displaying a photographing region, having the administrator or the like designate which region to be the detection target region 33 and which region to be the enlarging region 34, out of the photographing region, and generating the setting data 32 on the basis of this designation. The setting data 32 may be stored in the storage 13 in units of photographing devices 41, or in units of groups each formed by grouping the photographing devices 41. In this case, in step S11, the setting data 32 corresponding to the photographing device 41 that acquires the image data is read.

### (Step S12 of Fig. 2: Image Acquisition Process)

The image acquisition unit 22 acquires, via the communication interface 14, image data of a latest frame obtained by photographing a photographing region with the photographing device 41.

### (Step S13 of Fig. 2: Data Extraction Process)

The data extraction unit 23 extracts, out of the image data acquired in step S12, image data of a region including the detection target region 33 indicated by the setting data 32 which is read in step S11, as target data 35. In Embodiment 1 and according to the invention as claimed, the data extraction unit 23 sets the image data acquired in step S12, as the target data 35 with no change being made. Also, the data extraction unit 23 extracts, out of the target data, image data of the enlarging region 34 indicated by the setting data 32 which is read in step S11, as partial data 36.

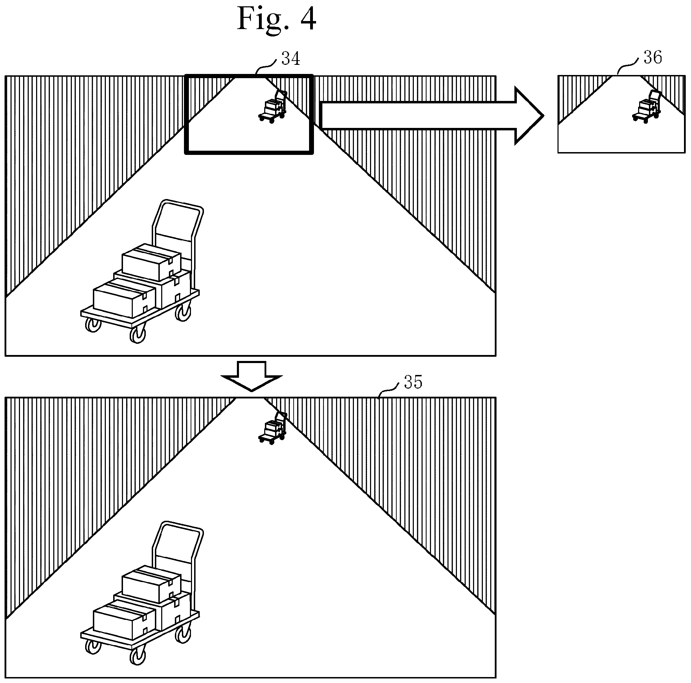

In a specific example, when the image data illustrated in Fig. 4 is acquired in step S12, the data extraction unit 23 sets the image data illustrated in Fig. 4 as the target data 35 with not change being made, and extracts, out of the image data illustrated in Fig. 4, image data of an enlarging region 34 portion, as the partial data 36.

### (Step S14 of Fig. 2: Size Modification Process)

The size modification unit 24 size-modifies each of the extracted target data 35 and the extracted partial data 36 to a request size requested by the object detection model 31. The object detection model 31 is a model that is generated by a scheme such as deep learning and that detects a target object from image data.

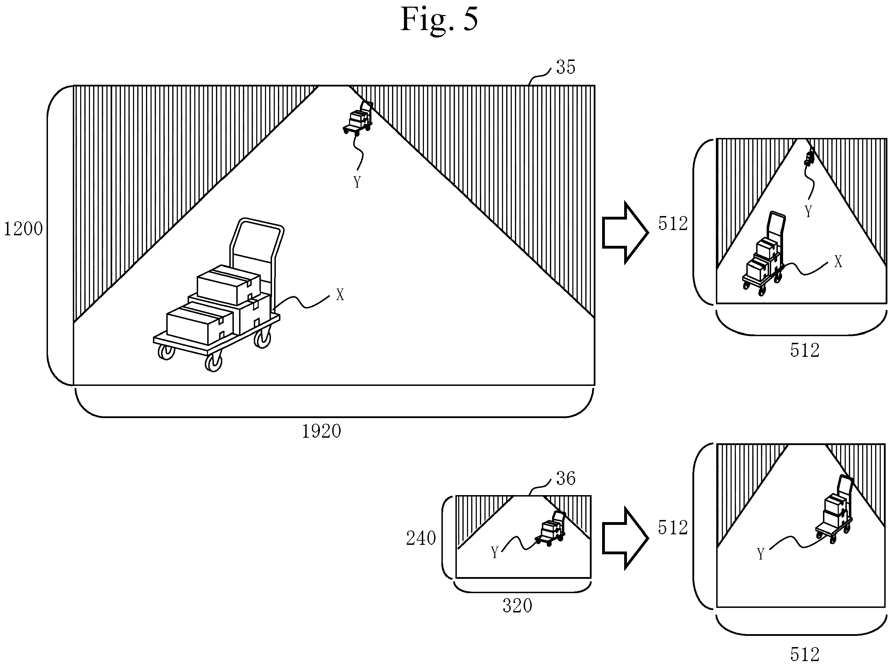

In a specific example, assume that the target data 35 is image data of 1920-pixel width × 1200-pixel length and that the partial data 36 is image data of 320-pixel width × 240-pixel length, as illustrated in Fig. 5. Also assume that the request size is 512-pixel width × 512-pixel length. In this case, the size modification unit 24 converts the target data 35 by reduction into image data of 512-pixel width × 512-pixel length. The size modification unit 24 also converts the partial data 36 by enlargement into mage data of 512-pixel width × 512-pixel length.

It is assumed that in principle the target data 35 is reduced. That is, it is assumed that the request size is smaller than the size of the target data 35. In contrast, the partial data 36 may be enlarged or reduced depending on the size of the enlarging region 34. However, as the partial data 36 is image data of part of the target data 35, the partial data 36, even if it should be reduced, will not be reduced by a magnification as large as that for the target data 35.

### (Step S15 of Fig. 2: Object Detection Process)

The object detection unit 25 inputs each of the target data 35 and the partial data 36 which are size-modified in step S14, to the object detection model 31, and detects a target object from each of the target data 35 and the partial data 36. Then, the object detection unit 25 takes a result detected from the target data 35 as first result data 37, and a result detected from the partial data 36 as second result data 38.

In a specific example, the object detection unit 25 inputs the target data 35 and the partial data 36, each of which has been converted into image data of 512-pixel width × 512-pixel length as illustrated in Fig. 5, to the object detection model 31. Then, an object X is detected from the target data 35. Also, an object Y is detected from the partial data 36. An object Y is included also in the target data 35. However, as the object Y in the target data 35 is very small, it is possible that the object Y is not detected from the target data 35.

### (Step S16 of Fig. 2: Integration Process)

The integration unit 26 generates integration result data by integrating the first result data 37 and the second result data 38, the first result data 37 expressing a result extracted from the target data 35, the second result data 38 having been extracted from the partial data 36.

It is possible that the same object is included in the first result data 37 and in the second result data 38. In a specific example, when an object Y is detected also from the target data 35 illustrated in Fig. 5, this signifies that the same object Y is detected from the target data 35 and from the partial data 36. Therefore, the integration unit 26 integrates the first result data 37 and the second result data 38 such that the same objects form one object. That is, the integration unit 26 integrates the first result data 37 and the second result data 38 such that even if the same object Y is detected from the target data 35 and from the partial data 36, the integration result data includes only one object Y.

For example, the integration unit 26 integrates the first result data 37 and the second result data 38 with employing a scheme such as Non-Maximum Suppression (NMS).

### ^{∗∗∗} Effect of Embodiment 1 ^{∗∗∗}

As described above, the object detection device 10 according to Embodiment 1 size-modifies not only the target data 35 but also the partial data 36 to the request size, and then inputs the size-modified target data 35 and the size-modified partial data 36 to the object detection model 31, so as to detect the target object. As a result, even an object that appears small, just as the object appearing deep in the background of the image data, can be detected by the object detection model 31.

That is, the target data 35 of Fig. 5 includes the object X and the object Y. However, when being inputted to the object detection model 31, the target data 35 is size-modified to the request size and accordingly the object Y becomes very small. Therefore, the object Y that should be normally detected is not detected from the target data 35.

Aside from the target data 35, the partial data 36 is also size-modified to the request size and then inputted to the object detection model 31. The partial data 36 is image data of part of the target data 35. Therefore, the object Y included in the size-modified partial data 36 is larger than the object Y included in the size-modified target data 35. For this reason, the object Y can be readily detected from the partial data 36.

The object detection device 10 according to Embodiment 1 integrates the first result data 37 and the second result data 38 such that the same objects form one object. Hence, integration result data from which one object is detected can be obtained in both of: a case where one object is detected from either one of the target data 35 and the partial data 36; and a case where one object is detected from both of the target data 35 and the partial data 36.

### *** Other Configurations ***

### < Modification 1 >

Depending on a distance, an angle, or the like between the photographing device 41 and a region to detect an object, a case is possible where the enlarging region 34 is not limited to a region deep in the background of the image data but may be decided on a region near the center. Also, depending on a photographing region of the photographing device 41, a plurality of enlarging regions 34 may be set.

That is, as a region to detect an object that appears small, any number of enlarging regions 34 may be set within a range that is an arbitrary region on the image data. By setting individual conditions of those enlarging regions 34 to the setting data 32 in units of photographing devices 41, the partial data 36 can be extracted in units of photographing devices 41.

### < Modification 2 >

In Embodiment 1, the function constituent elements are implemented by software. In Modification 2, the function constituent elements may be implemented by hardware. A difference of Modification 2 from Embodiment 1 will be described.

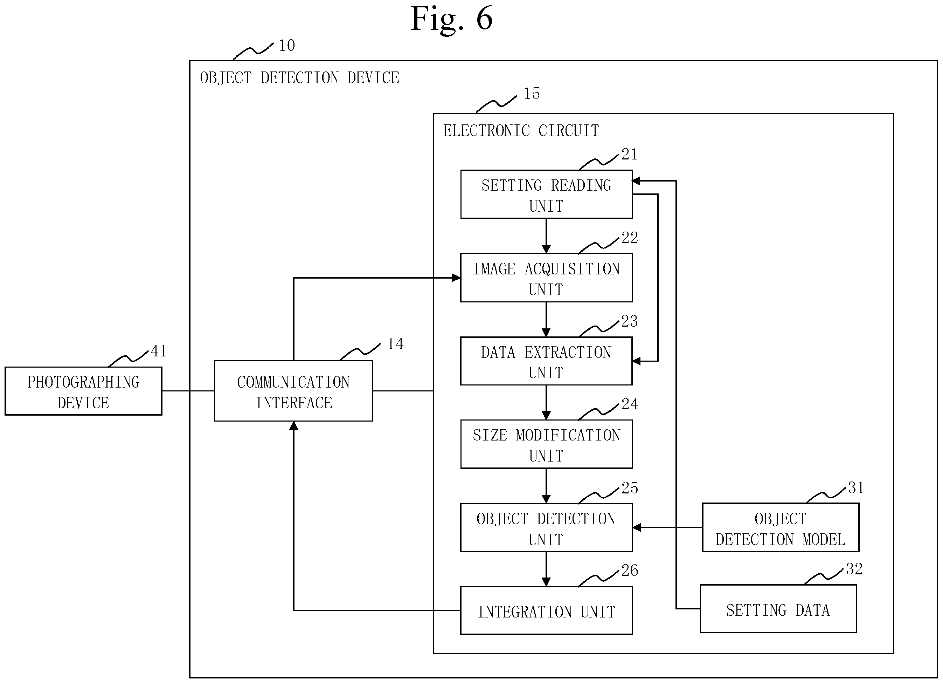

A configuration of an object detection device 10 according to Modification 2 will be described with referring to Fig. 6.

When the function constituent elements are implemented by hardware, the object detection device 10 is provided with an electronic circuit 15 in place of a processor 11, a memory 12, and a storage 13. The electronic circuit 15 is a dedicated circuit that implements functions of the function constituent elements and functions of the memory 12 and storage 13.

The electronic circuit 15 may be a single circuit, a composite circuit, a programmed processor, a parallel-programmed processor, a logic IC, a Gate Array (GA), an Application Specific Integrated Circuit (ASIC), or a Field-Programmable Gate Array (FPGA).

The function constituent elements may be implemented by one electronic circuit 15, or by a plurality of electronic circuits 15 through dispersion.

### < Modification 3 >

In Modification 3, some of the function constituent elements may be implemented by hardware, and the remaining function constituent elements may be implemented by software.

The processor 11, the memory 12, the storage 13, and the electronic circuit 15 are referred to as processing circuitry. That is, the functions of the function constituent elements are implemented by processing circuitry.

### Embodiment 2.

Only partial data 36 is inputted to an object detection model 31. In this respect, Embodiment 2 is different from Embodiment 1. In Embodiment 2, this difference will be described, and the same features will not be described. Embodiment 2 is outside the scope of the claimed invention but helpful to understand certain aspects thereof.

### ^{∗∗∗} Description of Operations ^{∗∗∗}

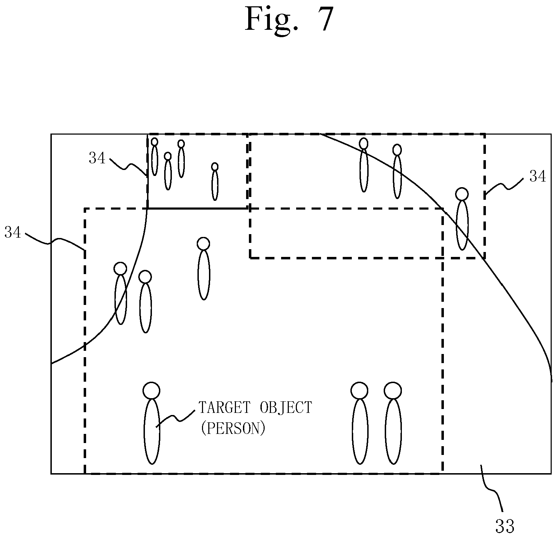

Operations of an object detection device 10 according to Embodiment 2 will be described with referring to Figs. 2 and 7.

An operation procedure of the object detection device 10 according to Embodiment 2 corresponds to an object detection method according to Embodiment 2. A program that implements the operations of the object detection device 10 according to Embodiment 2 corresponds to an object detection program according to Embodiment 2.

A process of step S12 is the same as that of Embodiment 1.

### (Step S11 of Fig. 2: Setting Reading Process)

A setting reading unit 21 reads setting data 32 indicating a detection target region 33 and an enlarging region 34 from a storage 13, just as in Embodiment 1.

In Embodiment 2, a plurality of enlarging regions 34 are set to roughly cover the detection target region 33, as illustrated in Fig. 7. A region of a size that matches a position in image data obtained with a photographing device 41 is set as each enlarging region 34. That is, for a position where a target object is smaller, a smaller enlarging region 34 is set. For example, for a region that is deeper in the background of the image data, a smaller-size enlarging region 34 is set; and for a region that is closer to the front side of the image data, a larger-size enlarging region 34 is set.

### (Step S13 of Fig. 2: Data Extraction Process)

A data extraction unit 23 extracts, out of the image data acquired in step 12, image data of each of the plurality of enlarging regions 34 indicated by the setting data 32 which is read in step S11, as partial data 36.

### (Step S14 of Fig. 2: Size Modification Process)

A size modification unit 24 size-modifies each of the plurality of pieces of extracted partial data 36 to the request size requested by the object detection model 31.

### (Step S15 of Fig. 2: Object Detection Process)

An object detection unit 25 inputs each of the plurality of pieces of partial data 36 which are size-modified in step S14, to the object detection model 31, and detects a target object from each of the plurality of pieces of partial data 36. Then, the object detection unit 25 takes a result detected from each of the plurality of pieces of partial data 36, as second result data 38.

### (Step S16 of Fig. 2: Integration Process)

An integration unit 26 generates integration result data by integrating the individual pieces of second result data 38 which are extracted respectively from the plurality of pieces of partial data 36. It is possible that the same object is included in the plurality of pieces of second result data 38. Therefore, the integration unit 26 integrates the plurality of pieces of second result data 38 such that the same objects form one object.

### *** Effect of Embodiment 2 ***

As described above, the object detection device 10 according to Embodiment 2 sets the plurality of enlarging regions 34 having sizes that match positions in the image data, and takes as input the partial data 36 of the enlarging regions 34, to detect a target object. Accordingly, detection is performed from image data having sizes that match the positions in the image data, with using the object detection model 31. As a result, a detection accuracy can be high.

The plurality of enlarging regions 34 described with referring to Fig. 7 are set to roughly cover the detection target region 33. However, the detection target region 33 is not necessarily covered with the enlarging regions 34. Depending on the photographing regions of the photographing devices 41, if a region or an object on which detection should focus exists on the detection target region 33, or inversely if a region that need not be detected exists on the detection target region 33, the setting data 32 may be set in units of photographing devices 41 such that the plurality of enlarging regions 34 are set on part of the detection target region 33.

### Embodiment 3.

An object detection model 31 is generated. In this respect, Embodiment 3 is different from Embodiments 1 and 2. In Embodiment 3, this difference will be described, and the same features will not be described.

In Embodiment 3, a case will be described where the object detection model 31 that conforms to Embodiment 1 is generated.

### *** Description of Configuration ***

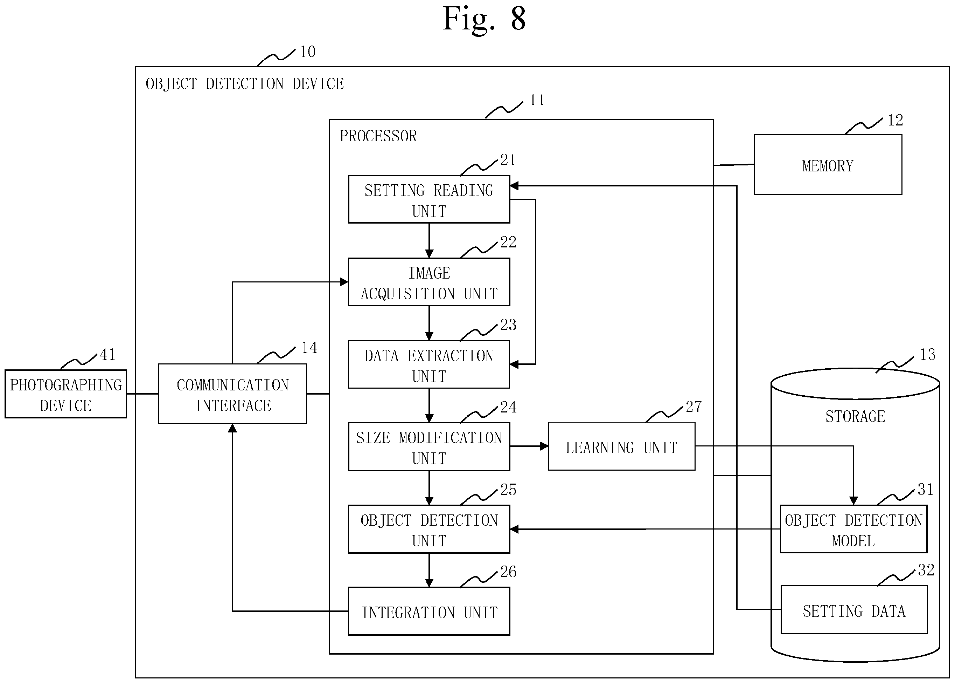

A configuration of an object detection device 10 according to Embodiment 3 will be described with referring to Fig. 8.

The object detection device 10 is provided with a learning unit 27 as a function constituent element, and in this respect is different from Embodiment 1. The learning unit 27 is implemented by software or hardware, just as any other function constituent element is.

### *** Description of Operations ***

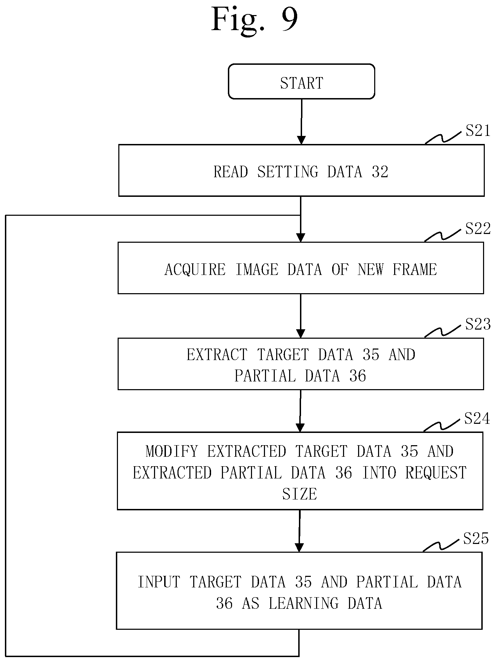

Operations of the object detection device 10 according to Embodiment 3 will be described with referring to Fig. 9.

An operation procedure of the object detection device 10 according to Embodiment 3 corresponds to an object detection method according to Embodiment 3. A program that implements the operations of the object detection device 10 according to Embodiment 3 corresponds to an object detection program according to Embodiment 3.

Processing of step S21 to step S24 is the same as processing of step S11 to step S14 of Fig. 2 in Embodiment 1.

### (Step S25 of Fig. 9: Learning Process)

Each of target data 35 and partial data 36 which are size-modified in step S23 is supplied to the learning unit 27 as learning data, so that the learning unit 27 generates the object detection model 31 through processing such as deep learning. Note that the target data 35 is image data of the same region as that of the target data 35 in the processing described with referring to Fig. 2, and that the partial data 36 is image data of the same region as that of the partial data 36 in the processing described with referring to Fig. 2.

For each of the target data 35 and the partial data 36, a target object included may be specified manually or so, and supervised learning data may be generated. The supervised learning data may be supplied to the learning unit 27, and the learning unit 27 may learn the supervised learning data.

### ^{∗∗∗} Effect of Embodiment 3 ^{∗∗∗}

As described above, not only the target data 35 but also the partial data 36 is supplied as the learning data to the object detection device 10 according to Embodiment 3, so that the object detection device 10 generates the object detection model 31. When the partial data 36 is compared with the target data 35, it is possible that as the size enlarges, the image of the partial data 36 becomes unclear partly or entirely. If image data including an unclear portion is not supplied as learning data, along with the enlargement, an accuracy of detection from the image data including the unclear portion may decrease.

Therefore, when the object detection model 31 is generated by supplying only the target data 35 as the learning data, it is possible that an accuracy of a process of detecting an object from the partial data 36 decreases. However, with the object detection device 10 according to Embodiment 3, since the partial data 36 is also supplied as the learning data, the accuracy of the process of detecting an object from the partial data 36 can be increased.

### ^{∗∗∗} Other Configurations ^{∗∗∗}

### < Modification 4 >

In Embodiment 3, a case of generating the object detection model 31 that conforms to Embodiment 1 has been described. It is also possible to generate an object detection model 31 that conforms to Embodiment 2.

In this case, the processing of step S21 to step S24 is the same as the processing of step S11 to step S14 of Fig. 2 in Embodiment 2. In step S25 of Fig. 9, each of a plurality of pieces of partial data 36 which are size-modified in step S23 is supplied to the learning unit 27 as the learning data, so that the learning unit 27 generates an object detection model 31 through processing such as deep learning. As a result, the same effect as that of Embodiment 3 can be achieved.

### < Modification 5 >

In Embodiment 3 and Modification 4, the object detection device 10 generates the object detection model 31. However, a learning device 50 that is different from the object detection device 10 may generate an object detection model 31.

As illustrated in Fig, 10, the learning device 50 is a computer. The learning device 50 is provided with hardware devices which are a processor 51, a memory 52, a storage 53, and a communication interface 54. The processor 51, the memory 52, the storage 53, and the communication interface 54 are the same as the processor 11, the memory 12, the storage 13, and the communication interface 14, respectively, of the object detection device 10.

The learning device 50 is provided with a setting reading unit 61, an image acquisition unit 62, a data extraction unit 63, a size modification unit 64, and a learning unit 65, as function constituent elements. Functions of the function constituent elements of the learning device 50 are implemented by software. The setting reading unit 61, the image acquisition unit 62, the data extraction unit 63, the size modification unit 64, and the learning unit 65 are the same as the setting reading unit 21, the image acquisition unit 22, the data extraction unit 23, the size modification unit 24, and the learning unit 27, respectively, of the object detection device 10.

The object detection device 10 in each embodiment may be applied to an Automated guided vehicle (AGV). An automated guided vehicle that employs an image recognition method as a guidance method reads marks and symbols illustrated on the floor or ceiling, and thereby obtains a position of its own. When the object detection device of the present invention is applied to the automated guided vehicle, even a mark appearing small can be detected. Hence, an automated guided vehicle that can move more accurately can be provided.

The embodiments and modifications of the present invention have been described above. Of these embodiments and modifications, some may be practiced by combination. One or several ones of the embodiments and modifications may be practiced partly. The scope of the present invention is defined by the appended claims.

### Reference Signs List

10: object detection device; 11: processor; 12: memory; 13: storage; 14: communication interface; 15: electronic circuit; 21: setting reading unit; 22: image acquisition unit; 23: data extraction unit; 24: size modification unit; 25: object detection unit; 26: integration unit; 27: learning unit; 31: object detection model; 32: setting data; 33: detection target region; 34: enlarging region; 35: target data; 36: partial data; 37: first result data; 38: second result data; 41: photographing device; 50: learning device; 51: processor; 52: memory; 53: storage; 54: communication interface; 61: setting reading unit; 62: image acquisition unit; 63: data extraction unit; 64: size modification unit; 65: learning unit.

## Claims

1. An object detection device (10) comprising:
a data extraction unit (23) to set image data obtained by photographing a detection target region with a photographing device (41), as target data (35), and to extract, out of the target data (35), image data of an enlarging region (34), as partial data (36);
a size modification unit (24) to size-modify each of the target data (35) and the partial data (36) which are extracted by the data extraction unit (23), to a request size requested by an object detection model (31) being a model that detects an object from image data; and
an object detection unit (25) to input each of the target data (35) and the partial data (36) which are size-modified by the size modification unit (24), to the object detection model (31), and to detect a target object from each of the target data (35) and the partial data (36).

2. The object detection device (10) according to claim 1, further comprising
an integration unit (26) to generate integration result data by integrating first result data (37) and second result data (38) such that same objects form one object, the first result data (37) expressing a result detected from the target data (35) by the object detection unit (25), the second result data (38) having been detected from the partial data (36).

3. The object detection device (10) according to claim 1 or 2, further comprising
a learning unit (27) to supply each of the target data (35) and the partial data (36) to the object detection model (31) as learning data, and to cause the object detection model (31) to learn the target data (35) and the partial data (36).

4. An object detection method comprising:
by a data extraction unit (23), setting image data obtained by photographing a detection target region with a photographing device (41), as target data (35), and extracting, out of the target data (35), image data of an enlarging region (34), as partial data (36);
by a size modification unit (24), size-modifying each of the target data (35) and the partial data (36) to a request size requested by an object detection model (31) being a model that detects an object from image data; and
by an object detection unit (25), inputting each of the target data (35) and the partial data (36) which are size-modified, to the object detection model (31), and detecting a target object from each of the target data (35) and the partial data (36).

5. An object detection program which causes a computer to function as an object detection device (10) that performs:
a data extraction process of setting image data obtained by photographing a detection target region with a photographing device (41), as target data (35), and extracting, out of the target data (35), image data of an enlarging region (34), as partial data (36);
a size modification process of size-modifying each of the target data (35) and the partial data (36) which are extracted by the data extraction process, to a request size requested by an object detection model (31) being a model that detects an object from image data; and
an object detection process of inputting each of the target data (35) and the partial data (36) which are size-modified by the size modification process, to the object detection model (31) , and detecting a target object from each of the target data (35) and the partial data (36).

6. A learning device (50) comprising:
a data extraction unit (63) to set image data obtained by a photographing device (41), as target data (35), and to extract, out of the target data (35), image data of an enlarging region (34), as partial data (36);
a size modification unit (64) to size-modify each of the target data (35) and the partial data (36) which are extracted by the data extraction unit (63), to a request size requested by an object detection model (31) being a model that detects an object from image data; and
a learning unit (65) to take each of the target data (35) and the partial data (36) which are size-modified by the size modification unit (64), as learning data, and to generate the object detection model (31), wherein the learning data is supervised learning data for which a target object has been specified.

7. A learning method comprising:
by a data extraction unit (63), setting image data obtained by a photographing device (41), as target data (35), and extracting, out of the target data (35), image data of an enlarging region (34), as partial data (36);
by a size modification unit (64), size-modifying each of the target data (35) and the partial data (36) to a request size requested by an object detection model (31) being a model that detects an object from image data; and
by a learning unit (65), taking each of the target data (35) and the partial data (36) which are size-modified, as learning data, and generating the object detection model (31), wherein the learning data is supervised learning data for which a target object has been specified.

8. A learning program which causes a computer to function as a learning device (50) that performs:
a data extraction process of setting image data obtained by a photographing device (41), as target data (35), and extracting, out of the target data (35), image data of an enlarging region (34), as partial data (36);
a size modification process of size-modifying each of the target data (35) and the partial data (36) which are extracted by the data extraction process, to a request size requested by an object detection model (31) being a model that detects an object from image data; and
a learning process of taking each of the target data (35) and the partial data (36) which are size-modified by the size modification process, as learning data, and generating the object detection model (31), wherein the learning data is supervised learning data for which a target object has been specified.

## Patentansprüche

1. Objektdetektionsvorrichtung (10), umfassend:
eine Daten-Extrahierungseinheit (23) zum Festlegen von Bilddaten, die durch Fotografieren eines Detektionszielbereichs mit einer Fotografiereinrichtung (41) erhalten werden, als Zieldaten (35) und zum Extrahieren von Bilddaten eines Vergrößerungsbereichs (34) aus den Zieldaten (35) als Teildaten (36);
eine Größen-Modifizierungseinheit (24), um jede der Zieldaten (35) und der Teildaten (36), die durch die Daten-Extrahierungseinheit (23) extrahiert werden, auf eine Anfragegröße zu modifizieren, die durch ein Objektdetektionsmodell (31) angefordert wird, das ein Modell ist, das ein Objekt aus Bilddaten erfasst; und
eine Objektdetektionseinheit (25) zum Eingeben der Zieldaten (35) und der Teildaten (36), die durch die Größen-Modifizierungseinheit (24) größenmodifiziert sind, in das Objektdetektionsmodell (31) und zum Erfassen eines Zielobjekts aus den Zieldaten (35) und den Teildaten (36).

2. Objektdetektionsvorrichtung (10) nach Anspruch 1, ferner umfassend
eine Integrationseinheit (26) zum Erzeugen von Integrationsergebnisdaten durch Integrieren von ersten Ergebnisdaten (37) und zweiten Ergebnisdaten (38), so dass dieselben Objekte ein Objekt bilden, wobei die ersten Ergebnisdaten (37) ein von der Objektdetektionseinheit (25) aus den Zieldaten (35) erfasstes Ergebnis ausdrücken und die zweiten Ergebnisdaten (38) aus den Teildaten (36) erfasst worden sind.

3. Objektdetektionsvorrichtung (10) nach Anspruch 1 oder 2, ferner umfassend
eine Lerneinheit (27), um sowohl die Zieldaten (35) als auch die Teildaten (36) dem Objektdetektionsmodell (31) als Lerndaten zuzuführen und das Objektdetektionsmodell (31) zu veranlassen, die Zieldaten (35) und die Teildaten (36) zu lernen.

4. Objektdetektionsverfahren, umfassend:
durch eine Daten-Extrahierungseinheit (23), Festlegen von Bilddaten, die durch Fotografieren eines Detektionszielbereichs mit einer Fotografiereinrichtung (41) erhalten werden, als Zieldaten (35) und Extrahieren von Bilddaten eines Vergrößerungsbereichs (34) aus den Zieldaten (35) als Teildaten (36);
durch eine Größen-Modifizierungseinheit (24), Größenmodifizieren der Zieldaten (35) und der Teildaten (36) auf eine Anfragegröße, die von einem Objektdetektionsmodell (31) angefordert wird, das ein Modell ist, das ein Objekt aus Bilddaten erfasst; und
durch eine Objektdetektionseinheit (25), Eingeben der Zieldaten (35) und der Teildaten (36), die größenmodifiziert sind, in das Objektdetektionsmodell (31), und Erfassen eines Zielobjekts aus den Zieldaten (35) und den Teildaten (36).

5. Objektdetektionsprogramm, das einen Computer dazu veranlasst, als eine Objektdetektionsvorrichtung (10) zu fungieren, die ausführt:
einen Daten-Extrahierungsprozess des Festlegens von Bilddaten, die durch Fotografieren eines Detektionszielbereichs mit einer Fotografiereinrichtung (41) erhalten werden, als Zieldaten (35) und des Extrahierens von Bilddaten eines Vergrößerungsbereichs (34) aus den Zieldaten (35) als Teildaten (36);
einen Größen-Modifizierungsprozess zur Größenmodifizierung der Zieldaten (35) und der Teildaten (36), die durch den Daten-Extrahierungsprozess extrahiert werden, auf eine Anfragegröße, die von einem Objektdetektionsmodell (31) angefordert wird, das ein Modell ist, das ein Objekt aus Bilddaten erfasst; und
einen Objektdetektionsprozess, bei dem die Zieldaten (35) und die Teildaten (36), die durch den Größen-Modifizierungsprozess größenmodifiziert wurden, in das Objektdetektionsmodell (31) eingegeben werden, und ein Zielobjekt aus den Zieldaten (35) und den Teildaten (36) erkannt wird.

6. Lernvorrichtung (50), umfassend:
eine Daten-Extrahierungseinheit (63) zum Festlegen von Bilddaten, die durch eine Fotografiereinrichtung (41) erhalten wurden, als Zieldaten (35) und zum Extrahieren von Bilddaten eines Vergrößerungsbereichs (34) aus den Zieldaten (35) als Teildaten (36);
eine Größen-Modifizierungseinheit (64), um jede der Zieldaten (35) und der Teildaten (36), die durch die Daten-Extrahierungseinheit (63) extrahiert werden, auf eine Anfragegröße zu modifizieren, die durch ein Objektdetektionsmodell (31) angefordert wird, das ein Modell ist, das ein Objekt aus Bilddaten erfasst; und
eine Lerneinheit (65), um die Zieldaten (35) und die Teildaten (36), die durch die Größen-Modifizierungseinheit (64) größenmodifiziert wurden, als Lerndaten zu verwenden und das Objektdetektionsmodell (31) zu erzeugen, wobei die Lerndaten überwachte Lerndaten sind, für die ein Zielobjekt spezifiziert wurde.

7. Lernverfahren, umfassend:
durch eine Daten-Extrahierungseinheit (63), Festlegen von Bilddaten, die durch eine Fotografiereinrichtung (41) erhalten wurden, als Zieldaten (35) und Extrahieren von Bilddaten eines Vergrößerungsbereichs (34) aus den Zieldaten (35) als Teildaten (36);
durch eine Größen-Modifizierungseinheit (64), die Größe der Zieldaten (35) und der Teildaten (36) auf eine Anfragegröße modifiziert, die von einem Objektdetektionsmodell (31) angefordert wird, das ein Modell ist, das ein Objekt aus Bilddaten erfasst; und
durch eine Lerneinheit (65), die die Zieldaten (35) und die größenmodifizierten Teildaten (36) jeweils als Lerndaten verwendet und das Objektdetektionsmodell (31) erzeugt, wobei die Lerndaten überwachte Lerndaten sind, für die ein Zielobjekt spezifiziert wurde.

8. Lernprogramm, das einen Computer dazu bringt, als Lernvorrichtung (50) zu fungieren, die durchführt:
einen Daten-Extrahierungsprozess des Festlegens von Bilddaten, die durch eine Fotografiereinrichtung (41) erhalten wurden, als Zieldaten (35) und des Extrahierens von Bilddaten eines Vergrößerungsbereichs (34) aus den Zieldaten (35) als Teildaten (36);
einen Größen-Modifizierungsprozess zur Größenmodifizierung der Zieldaten (35) und der Teildaten (36), die durch den Daten-Extrahierungsprozess extrahiert werden, auf eine Anfragegröße, die von einem Objektdetektionsmodell (31) angefordert wird, das ein Modell ist, das ein Objekt aus Bilddaten erfasst; und
einen Lernprozess, bei dem die Zieldaten (35) und die Teildaten (36), die durch den Größen-Modifizierungsprozess größenmodifiziert wurden, als Lerndaten genommen werden und das Objektdetektionsmodell (31) erzeugt wird, wobei die Lerndaten überwachte Lerndaten sind, für die ein Zielobjekt spezifiziert wurde.

## Revendications

1. Dispositif de détection d'objet (10) comprenant :
une unité d'extraction de données (23) pour définir des données d'image obtenues par photographie d'une région cible de détection avec un dispositif photographique (41), en tant que données cibles (35), et pour extraire, à partir des données cibles (35), des données d'image d'une région d'agrandissement (34), en tant que données partielles (36) ;
une unité de modification de taille (24) pour modifier la taille de chacune des données cibles (35) et des données partielles (36) qui sont extraites par l'unité d'extraction de données (23), à une taille de demande demandée par un modèle de détection d'objet (31) étant un modèle qui détecte un objet à partir de données d'image ; et
une unité de détection d'objet (25) pour entrer chacune des données cibles (35) et des données partielles (36) qui sont modifiées en taille par l'unité de modification de taille (24), dans le modèle de détection d'objet (31), et pour détecter un objet cible à partir de chacune des données cibles (35) et des données partielles (36).

2. Dispositif de détection d'objet (10) selon la revendication 1, comprenant en outre
une unité d'intégration (26) pour générer des données de résultat d'intégration par intégration de premières données de résultat (37) et des deuxièmes données de résultat (38) de sorte que les mêmes objets forment un objet, les premières données de résultat (37) exprimant un résultat détecté à partir des données cibles (35) par l'unité de détection d'objet (25), les deuxièmes données de résultat (38) ayant été détectées à partir des données partielles (36).

3. Dispositif de détection d'objet (10) selon la revendication 1 ou 2, comprenant en outre
une unité d'apprentissage (27) pour distribuer chacune des données cibles (35) et des données partielles (36) au modèle de détection d'objet (31) en tant que données d'apprentissage, et pour amener le modèle de détection d'objet (31) à apprendre les données cibles (35) et les données partielles (36).

4. Procédé de détection d'objet comprenant :
par une unité d'extraction de données (23), la définition de données d'image obtenues par photographie d'une région cible de détection avec un dispositif photographique (41), en tant que données cibles (35), et l'extraction, à partir des données cibles (35), de données d'image d'une région d'agrandissement (34), en tant que données partielles (36) ;
par une unité de modification de taille (24), la modification de taille de chacune des données cibles (35) et des données partielles (36) à une taille de demande demandée par un modèle de détection d'objet (31) étant un modèle qui détecte un objet à partir de données d'image ; et
par une unité de détection d'objet (25), l'entrée de chacune des données cibles (35) et des données partielles (36) qui sont modifiées en taille, dans le modèle de détection d'objet (31), et la détection d'un objet cible à partir de chacune des données cibles (35) et des données partielles (36).

5. Programme de détection d'objet qui amène un ordinateur à fonctionner comme un dispositif de détection d'objet (10) qui effectue :
un processus d'extraction de données de définition de données d'image obtenues par photographie d'une région cible de détection avec un dispositif photographique (41), en tant que données cibles (35), et l'extraction, à partir des données cibles (35), de données d'image d'une région d'agrandissement (34), en tant que données partielles (36) ;
un processus de modification de taille de modification de taille de chacune des données cibles (35) et des données partielles (36) qui sont extraites par le processus d'extraction de données, à une taille de demande demandée par un modèle de détection d'objet (31) étant un modèle qui détecte un objet à partir de données d'image ; et
un processus de détection d'objet d'entrée de chacune des données cibles (35) et des données partielles (36) qui sont modifiées en taille par le processus de modification de taille, dans le modèle de détection d'objet (31), et détection d'un objet cible à partir de chacune des données cibles (35) et des données partielles (36).

6. Dispositif d'apprentissage (50) comprenant :
une unité d'extraction de données (63) pour définir des données d'image obtenues par un dispositif photographique (41), en tant que données cibles (35), et pour extraire, à partir des données cibles (35), des données d'image d'une région d'agrandissement (34), en tant que données partielles (36) ;
une unité de modification de taille (64) pour modifier la taille de chacune des données cibles (35) et des données partielles (36) qui sont extraites par l'unité d'extraction de données (63), à une taille de demande demandée par un modèle de détection d'objet (31) étant un modèle qui détecte un objet à partir de données d'image ; et
une unité d'apprentissage (65) pour utiliser chacune des données cibles (35) et des données partielles (36) qui sont modifiées en taille par l'unité de modification de taille (64), en tant que données d'apprentissage, et pour générer le modèle de détection d'objet (31), dans lequel les données d'apprentissage sont des données d'apprentissage supervisé pour lesquelles un objet cible a été spécifié.

7. Procédé d'apprentissage comprenant :
par une unité d'extraction de données (63), la définition de données d'image obtenues par un dispositif photographique (41), en tant que données cibles (35), et l'extraction, à partir des données cibles (35), de données d'image d'une région d'agrandissement (34), en tant que données partielles (36) ;
par une unité de modification de taille (64), la modification de taille de chacune des données cibles (35) et des données partielles (36) à une taille de demande demandée par un modèle de détection d'objet (31) étant un modèle qui détecte un objet à partir de données d'image ; et
par une unité d'apprentissage (65), l'utilisation de chacune des données cibles (35) et des données partielles (36) qui sont modifiées en taille, en tant que données d'apprentissage, et la génération du modèle de détection d'objet (31), dans lequel les données d'apprentissage sont des données d'apprentissage supervisé pour lesquelles un objet cible a été spécifié.

8. Programme d'apprentissage qui amène un ordinateur à fonctionner comme un dispositif d'apprentissage (50) qui effectue :
un processus d'extraction de données de définition de données d'image obtenues par un dispositif photographique (41), en tant que données cibles (35), et l'extraction, à partir des données cibles (35), de données d'image d'une région d'agrandissement (34), en tant que données partielles (36) ;
un processus de modification de taille de modification de taille de chacune des données cibles (35) et des données partielles (36) qui sont extraites par le processus d'extraction de données, à une taille de demande demandée par un modèle de détection d'objet (31) étant un modèle qui détecte un objet à partir de données d'image ; et
un processus d'apprentissage d'utilisation de chacune des données cibles (35) et des données partielles (36) qui sont modifiées en taille par le processus de modification de taille, en tant que données d'apprentissage, et de génération du modèle de détection d'objet (31), dans lequel les données d'apprentissage sont des données d'apprentissage supervisé pour lesquelles un objet cible a été spécifié.
